## Europäisches Patentamt
## European Patent Office
## Office européen des brevets

(19)

(11) Numéro de publication: **0 063 984**
**B1**

(12) **FASCICULE DE BREVET EUROPEEN**

(45) Date de publication du fascicule du brevet:
23.01.85

(21) Numéro de dépôt: **82400641.5**

(22) Date de dépôt: **07.04.82**

(51) Int. Cl.⁴: **G 06 M 1/06, G 01 C 22/00**

(54) Compteur kilométrique à mécanisme de démultiplication planétaire, pour véhicule à deux roues ou analogue.

(30) Priorité: **22.04.81 FR 8107997**

(43) Date de publication de la demande:
**03.11.82 Bulletin 82/44**

(45) Mention de la délivrance du brevet:
**23.01.85 Bulletin 85/4**

(84) Etats contractants désignés:
**BE DE GB IT LU NL**

(56) Documents cités:
**FR - A - 471 890**
**FR - A - 1 341 951**
**US - A - 3 812 331**

(73) Titulaire: **HURET ET SES FILS Société dite:, 60 Avenue Félix Faure, F-92000 Nanterre (FR)**

(72) Inventeur: **Huret, Roger, décédé (FR)**

(74) Mandataire: **Bressand, Georges et al, c/o CABINET LAVOIX 2 Place d'Estienne d'Orves, F-75441 Paris Cedex 09 (FR)**

BUNDESDRUCKEREI BERLIN

## Description

Il est bien connu que les compteurs kilométriques destinés aux véhicules à deux roues ou analogues doivent non seulement être robustes mais également avoir des dimensions le plus faible possible et un couple élevé.

Les compteurs habituellement utilisés comportent à l'intérieur d'un boîtier prolongé par une entrée de câble de commande un système indicateur totalisateur et un mécanisme de démultiplication interposé entre ce système et un axe rotatif solidaire du câble de commande. Afin de permettre une démultiplication suffisamment importante et suffisamment précise, le mécanisme de démultiplication comporte des renvois d'angle par vis sans fin.

La démultiplication obtenue est satisfaisante. Toutefois, la fabrication des vis sans fin est délicate et leur montage doit être effectué avec précision.

La présente invention a donc pour but de rendre plus simples la réalisation et le montage du mécanisme de démultiplication tout en réduisant son encombrement.

Cette invention a en effet pour objet un compteur kilométrique dont le mécanisme de démultiplication comporte un satellite excentré portant deux dentures extérieures, coaxiales et superposées, ayant, des nombres de dents différents, qui sont en prise l'une avec une denture fixe et l'autre avec un planétaire libre en rotation, un excentrique solidaire de l'axe de liaison au câble de commande qui entraîne le satellite pour provoquer la rotation du planétaire, ce dernier comportant à sa partie supérieure une denture spirale axiale d'entraînement du système totalisateur indicateur.

Dans un tel mécanisme les différents organes: satellite, denture fixe ou planétaire, par exemple, sont constitués par des couronnes de faible hauteur axiale qui sont simplement disposées les unes au-dessus des autres ou les unes à l'intérieur des autres et doivent simplement être disposées de façon à être mises en contact sans précision particulière.

Selon un mode de réalisation particulier, le compteur objet de l'invention comporte également un tachymètre magnétique, l'excentrique comportant un évidement central de logement d'un disque aimanté et d'une cloche solidaire d'une aiguille indicatrice.

La description ci-dessous d'un mode de réalisation donné à titre d'exemple non limitatif fera d'ailleurs ressortir les avantages et caractéristiques de l'invention. Sur les dessins:

la Fig. 1 est une vue en coupe axiale d'un compteur suivant l'invention;

la Fig. 2 est une vue de dessus du boîtier de ce compteur;

la Fig. 3 est une vue éclatée montrant les organes du mécanisme de démultiplication avant leur introduction dans le boîtier;

la Fig. 4 est un schéma de la chaîne cinématique du mécanisme de démultiplication.

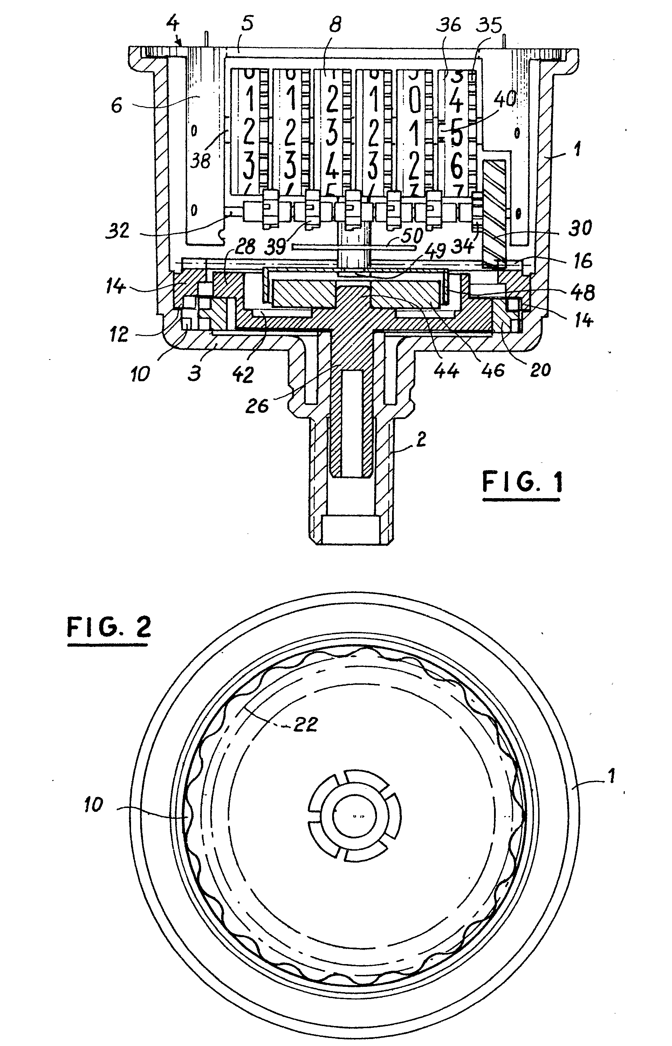

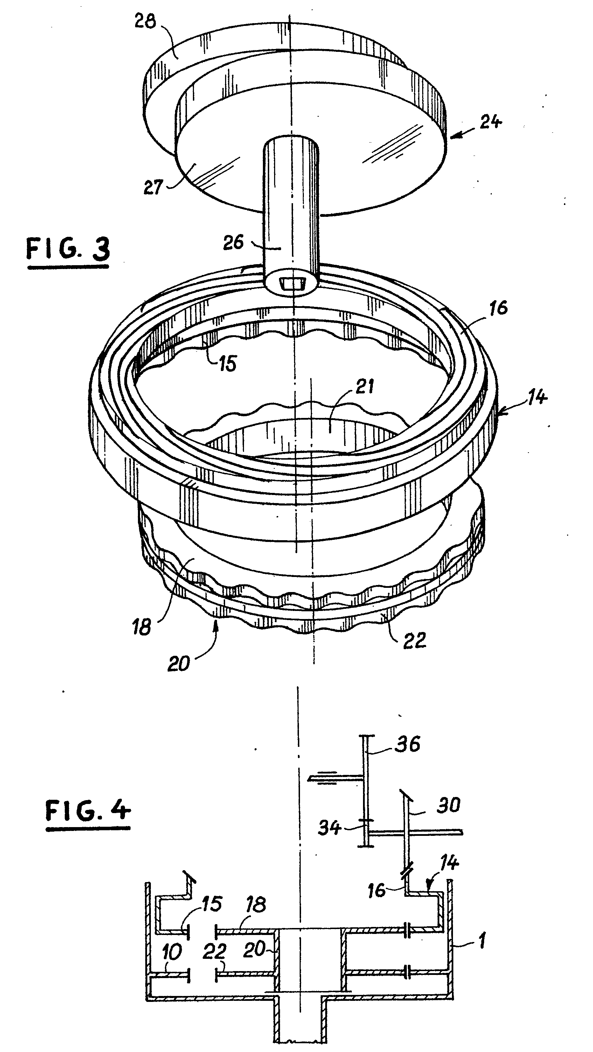

Le compteur représenté sur la Fig. 1 comporte un boîtier 1 qui est prolongé à l'une de ses extrémités par une entrée de câble de commande 2. A son extrémité opposée le boîtier 1 est fermé par une platine 4 qui comporte d'une part une plaque 5 percée d'une fenêtre de lecture et d'autre part des ailes 6 de support d'organes de comptage 8. La paroi latérale du boîtier 1 comporte au niveau du fond 3 une denture interne circulaire 10 et, légèrement au-dessus de cette denture, un épaulement interne 12 qui délimite un logement pour un planétaire annulaire 14. Comme le montre plus particulièrement la Fig. 3, le planétaire 14 comporte d'une part une couronne dentée intérieurement 15 et d'autre part, à sa partie supérieure, une denture en spirale 16 dont les dents sont dirigées axialement.

Le planétaire 14 est libre en rotation à l'intérieur du boîtier cylindrique 1 sur l'épaulement 12. Sa denture interne 15 est toutefois en prise avec la denture supérieure 18 d'un satellite 20 monté de manière excentrée dans le boîtier 1. Le satellite 20 tourne sur le fond 3 du boîtier cylindrique et comporte une seconde denture extérieure 22 qui est en prise avec la denture interne 10 du boîtier. Les deux dentures extérieures 18 et 22 sont ainsi coaxiales et superposées bien que séparées par une distance qui correspond sensiblement à la distance entre la denture interne 10 du boîtier et la couronne dentée intérieurement 15 du planétaire. Les dentures 18 et 22 du satellite 20 ont toutefois des nombres de dents différents, la denture inférieure 22 ayant en outre un nombre de dents inférieur à celui de la denture interne 10 du boîtier, tandis que la denture supérieure 18 a un nombre de dents analogue à celui de la couronne interne 15 du planétaire. Par exemple, la denture interne du boîtier comporte vingt-et-une dents, tandis que la denture inférieure 22 du satellite n'en comporte que dix-neuf, la denture supérieure du satellite de même que la couronne du planétaire comportant vingt dents.

La surface interne 21 du satellite annulaire 20 est par ailleurs en contact avec un excentrique 24 qui est solidaire d'un axe 26 logé dans le prolongement 2 du boîtier 1 et destiné à être raccordé au câble de commande et à tourner avec ce dernier. L'excentrique 24 comporte de préférence deux disques circulaires décalés de 180° et fixés sur le même axe 24 de manière que la distance maximale entre le centre de cet axe et leur bord périphérique correspondent au diamètre interne du satellite 20. Le disque inférieur 27 a en outre une épaisseur axiale analogue à celle du satellite 20. Par suite, ce disque inférieur 27 est toujours en contact en un point avec le satellite 20 tandis que le disque supérieur 28 appuie en un point opposé sur le satellite et le maintient en position à l'intérieur du boîtier (Fig. 1).

Lors de la rotation du câble de commande l'axe 26 et l'excentrique 24 sont également entraînés en rotation. Le disque inférieur 27 de l'excentrique 24 repousse alternativement le satellite 20 dans deux directions opposées au cours de chacune de ses rotations et le déplace ainsi dent à dent autour de la denture interne fixe 10 du boîtier. Comme la denture supérieure 18 du satellite a un nombre de dents différent, elle provoque le déplacement du planétaire 14 d'une distance qui est fonction de cette différence, et par suite celui de la denture spirale 16 de la partie supérieure de ce planétaire.

La denture spirale 16 forme un renvoi d'angle avec un pignon 30 qui est monté libre en rotation sur un axe 32 porté par les deux ailes opposées 6 de la platine 4. Le nombre des dents du pignon 30 est de préférence égal à celui des dents spirales de la denture 16 mais, par contre, cette denture spirale 16 comporte un nombre de dents nettement inférieur à celui de la couronne dentée 15 du même planétaire. Par exemple, la douronne dentée 15 comporte vingt dents, tandis que la denture spirale 16 et le pignon 30 en comportent treize.

La rotation du pignon denté 30 est transmise aux organes de comptage car ce pignon 30 est solidaire d'un pignon étoile 34 en prise avec les crans latéraux 35 de la première d'une série de roues graduées 36. Toutes les roues graduées 36 sont libres en rotation sur un même axe 38 porté par les deux ailes 6 de la platine 4 et comportent des crans 35 en prise avec un pignon étoile 39 libre en rotation sur l'axe 32. Par ailleurs, les roues graduées 36 à l'exception de la dernière comportent un toc latéral 40 d'entraînement du pignon étoile 39 en prise avec la roue suivante. De cette manière, chaque roue 36 provoque le déplacement de la roue suivante d'une graduation à chacun de ses tours tandis que le déplacement de la première roue 36 est fonction de la vitesse de rotation du câble de commande et du rapport du mécanisme de démultiplication. Il est clair que ce rapport peut varier en fonction du nombre de dents des différents organes et notamment des dentures du planétaire et/ou du satellite. Ceci apparaît plus clairement sur le schéma de la Fig. 4 qui montre la chaîne cinématique du mécannisme de démultiplication entraînant la première roue graduée 36.

Cette Fig. 4, comme d'ailleurs la Fig. 1, fait apparaître clairement les positions relatives des différents organes annulaires les uns à l'intérieur des autres et leur maintient par simple contact les uns avec les autres. En effet, lors de l'assemblage du compteur, le satellite annulaire 20 est introduit à l'intérieur du boîtier de façon à reposer sur le fond 3 de celui-ci, puis le planétaire est introduit à son tour et placé sur l'épaulement 12. L'introduction également axiale de l'excentrique 24 de manière que l'axe de commande 26 glisse dans le prolongement 2 du boîtier repousse le satellite 20 latéralement et oblige les dentures inférieure 22 et supérieure 18 à entrer en prise respectivement avec la denture 10 du boîtier et avec la denture 15 du planétaire 14. En même temps, le disque supérieur 28 de l'excentrique 24 appuie sur le satellite 20 et le bloque axialement.

La platine 4 portant les organes de comptage ainsi que le pignon étoile 34 et le pignon d'entraînement 30, peut alors être introduite dans le boîtier 1 de façon à mettre le pignon 30 en prise avec la denture spirale 16. Aucune précision de centrage n'est nécessaire puisque les positions angulaires relatives initiales des différents organes n'ont pas d'importance. Leur déplacement angulaire sous l'effet de la rotation du câble de commande sera le même quelles que soient les dents des organes qui sont primitivement en contact. Le montage du compteur est par suite extrêmement simple.

En outre, la réalisation des différents composants constitués uniquement par des couronnes planétaires ou satellites est nettement plus facile que celle des organes du type vis sans fin ou analogue, utilisés antérieurement. De préférence d'ailleurs, les dents ne présentent pas d'arêtes vives, mais un profil incurvé facilitant leur glissement sur la denture opposée.

De préférence, le compteur ainsi réalisé comporte également un dispositif indicateur de vitesse. Dans ce but, l'excentrique 24 est évidé dans sa partie centrale pour former un logement annulaire 42 autour d'un pion central 44. Dans le logement 42 est monté un disque aimanté 46 percé d'un trou axial d'emboîtement sur le pion 44. Le diamètre du disque 46 est inférieur à celui du logement 42 de sorte que, dans l'espace entre eux, peut pénétrer la jupe latérale d'une cloche 48 solidaire d'un axe vertical 49 de support d'une aiguille indicatrice (non représentée) qui est fixée dans la platine 4, et rappelée par un ressort spirale 50. Le disque aimanté 46 est ainsi entraîné en même temps que l'excentrique 24 par le câble de commande fixé sur l'axe 26. Il transmet ce mouvement à la cloche 48 et par suite à l'aiguille indicatrice de vitesse.

Le compteur ainsi réalisé peut, de la même manière que précédemment, être monté par un simple empilage des différents organes à l'intérieur du boîtier. En outre, l'encombrement du mécanisme de démultiplication se limite à la hauteur du planétaire au-dessus du fond 3 du boîtier, c'est-à-dire pratiquement à la superposition des trois dentures fixe 10 et mobiles 15 et 16, les autres organes et notamment le satellite et l'excentrique, avec éventuellement le disque aimanté et la cloche, étant placés à l'intérieur de cet espace. Il en résulte un compteur de dimensions nettement plus réduites que les compteurs habituels, qui présente en outre l'avantage de pouvoir être monté facilement sans exigences particulières de précision.

**Revendications**

1. Compteur kilométrique, caractérisé en ce qu'il comporte, entre un câble de commande et des organes de comptage totalisateurs (8), un satellite excentré (20) portant deux dentures (18—22) extérieures, coaxiales et superposées, ayant des nombres de dents différents, qui sont en prise l'une (22) avec une denture fixe (10) et l'autre (18) avec un planétaire (14) libre en rotation; et un excentrique (24), solidaire d'un axe de liaison au câble de commande, qui entraîne le satellite (20) pour provoquer la rotation du planétaire (14), ce dernier comportant à sa partie supérieure une denture spirale axiale (16) d'entraînement des organes de comptage (8).

2. Compteur kilométrique suivant la revendication 1, caractérisé en ce que la denture fixe (14) est venue de moulage avec un boîtier (1) contenant l'ensemble du mécanisme du compteur.

3. Compteur kilométrique suivant l'une des revendications 1 et 2, caractérisé en ce que la denture inférieure (22) du satellite a un nombre de dents inférieur à celui de la denture supérieure (18).

4. Compteur kilométrique suivant l'une quelconque des revendications 1 à 3, caractérisé en ce que la denture inférieure (22) du satellite a un nombre de dents inférieur à celui de la denture fixe (10) avec laquelle elle est en prise.

5. Compteur kilométrique suivant l'une des revendications 1 à 4, caractérisé en ce que le planétaire (14) comporte d'une part une couronne à denture radiale (15) dont le nombre de dents est égal à celui de la denture supérieure (18) du satellite et d'autre part une denture spirale axiale ayant un nombre de dents inférieur.

6. Compteur kilométrique suivant l'une des revendications 1 à 5, caractérisé en ce qu'il comporte un pignon étoile (34) d'entraînement des organes de comptage (8) qui est solidaire d'un pignon denté (30) en prise avec la denture spirale (16) du planétaire.

7. Compteur kilométrique suivant l'une des revendications 1 à 6 associé à un compteur de vitesse, caractérisé en ce que l'excentrique d'entraînement (24) comporte un évidement central (42) de logement d'un disque aimanté (46) solidaire de cet excentrique et d'une cloche (48) portée par un axe de support d'une aiguille indicatrice de vitesse.

8. Compteur kilométrique suivant l'une des revendications 1 à 7, caractérisé en ce que l'excentrique d'entraînement (24) comporte deux disques excentrés (27 et 28) décalés de 180° et solidaires d'un axe de commande (24), le disque inférieur (27) étant en contact avec la surface interne du satellite, tandis que l'autre disque (28) se déplace librement à l'intérieur du planétaire audessus du satellite.

9. Compteur kilométrique suivant l'une des revendications 1 à 8, caractérisé en ce que le pignon denté (30) d'entraînement des organes de comptage a le même nombre de dents que la denture spirale axiale (16) du planétaire.

## Patentansprüche

1. Kilometerzähler, dadurch gekennzeichnet, daß zwischen einer Antriebswelle und Organen eines Totalisator-Zählwerkes (8) ein exzentrisches Satellitenrad (20) mit zwei koaxial zueinander und übereinander angeordneten, unterschiedliche Zähnezahlen aufweisenden Außenverzahnungen (18, 20) angeordnet ist, wobei die eine Verzahnung (22) mit einer festen Gegenverzahnung (10) und die andere Verzahnung (18) mit einem frei drehbaren Planetenrad (14) in Eingriff ist, und daß ein mit einer Achse für die Verbindung mit der Antriebswelle versehener Exzenter (24) vorgesehen ist, welcher das Satellitenrad (20) antreibt und damit die Drehung des Planetenrades (14) bewirkt, wobei dieses letztere in seinem oberen Bereich eine axiale Spiralverzahnung (16) zum Antrieb der Organe des Zählwerkes (8) trägt.

2. Kilometerzähler nach Anspruch 1, dadurch gekennzeichnet, daß die feste Gegenverzahnung (10) an einem Gehäuse (1) angeformt ist, welches den gesamten Mechanismus des Kilometerzählers aufnimmt.

3. Kilometerzähler nach einem der Ansprüche 1 oder 2, dadurch gekennzeichnet, daß die untere Verzahnung (22) des Satellitenrades eine kleinere Zähnezahl aufweist als die obere Verzahnung (18).

4. Kilometerzähler nach einem der Ansprüche 1 bis 3, dadurch gekennzeichnet, daß die untere Verzahnung (22) des Satellitenrades eine kleinere Zähnezahl aufweist als die feste Gegenverzahnung (10), mit der sie in Eingriff steht.

5. Kilometerzähler nach einem der Ansprüche 1 bis 4, dadurch gekennzeichnet, daß das Planetenrad (14) einerseits einen radial verzahnten Zahnkranz (15) aufweist, dessen Zähnezahl der der oberen Verzahnung (18) des Satellitenrades gleich ist, und andererseits eine axiale Spiralverzahnung mit einer kleineren Zähnezahl.

6. Kilometerzähler nach einem der Ansprüche 1 bis 5, dadurch gekennzeichnet, daß er ein stirnverzahntes Ritzel (34) zum Antrieb der Organe des Zählwerkes (8) umfaßt, welches mit einem Zahnritzel (30) fest verbunden ist, das mit der Spiralverzahnung (16) des Planetenrades in Eingriff steht.

7. Kilometerzähler nach einem der Ansprüche 1 bis 6, dadurch gekennzeichnet, daß der Antriebsexzenter (24) eine zentrale Ausnehmung (42) zur Aufnahme einer mit diesem Exzenter fest verbundenen Magnetscheibe (46) und einer Mitnehmerglocke (48) aufweist, die auf einer einen Geschwindigkeits-Anzeigerpfeil tragenden Achse befestigt ist.

8. Kilometerzähler nach einem der Ansprüche 1 bis 7, dadurch gekennzeichnet, daß der Antriebsexzenter (24) zwei Scheiben (27, 28) mit einer um 180° versetzten Exzentrizität umfaßt, welche mit einer Antriebsachse (24) fest verbunden sind, wobei die untere Scheibe (27) mit der Innenfläche des Satellitenrades in Berührung steht und die andere Scheibe (28) sich innerhalb des Planetenrades oberhalb des Satellitenrades frei bewegt.

9. Kilometerzähler nach einem der Ansprüche 1 bis 8, dadurch gekennzeichnet, daß das Zahnritzel (30) zum Antrieb der Organe des Zählwerkes (8) die gleiche Zähnezahl hat, wie die axiale Spiralverzahnung (16) des Planetenrades.

## Claims

1. A distance recorder, characterized in that it comprises, between a driving cable and recording and adding means (8), an eccentric planet gear (20) carrying two outer superimposed coaxial sets of teeth (18—22) which have different numbers of teeth and are engaged, one (22) with a fixed gear (10) and the other (18) with an internal gear (14) which is freely rotatable; and an eccentric (24) rigid with a shaft for connecting to the cable driving the planet gear (20) so as to rotate the internal gear (14), the latter having, in the upper part thereof, an axial spiral gear (16) for driving the recording means (8).

2. A distance recorder according to claim 1, characterized in that the fixed gear (10) is moulded with a case (1) containing the whole of the mechanism of the recorder.

3. A distance recorder according to claim 1 or 2, characterized in that the lower set of teeth (22) of the planet gear has a smaller number of teeth than the upper set of teeth (18).

4. A distance recorder according to any of the claims 1, 2 or 3, characterized in that the lower set of teeth (22) of the planet gear has a smaller number of teeth than the fixed gear (10) with which it is engaged.

5. A distance recorder according to one of the claims 1 to 4, characterized in that the internal gear (14) comprises, on one hand, a ring of radial teeth (15) having a number of teeth equal to the number of teeth of the upper set of teeth (18) of the planet gear and, on the other hand, an axial spiral gear having a smaller number of teeth.

6. A distance recorder according to one of the claims 1 to 5, characterized in that it comprises a star gear (34) for driving the recording means (8) and rigid with a gear (30) engaged with the spiral gear (16) of the internal gear.

7. A distance recorder according to one of the claims 1 to 6, associated with a speedometer, characterized in that the driving eccentric (24) comprises a centre cavity (42) receiving a magnetised disc (46) rigid with said eccentric and a cup (48) carried by a shaft carrying a speed indicator needle.

8. A distance recorder according to one of the claims 1 to 7, characterized in that the driving eccentric (24) comprises two eccentric discs (27 and 28) offset 180° from each other and rigid with a driving shaft (24), the lower disc (27) being in contact with the inner surface of the planet gear and the other disc (28) moving freely within the internal gear above the planet gear.

9. A distance recorder according to one of the claims 1 to 8, characterized in that the gear (30) for driving the recording means has the same number of teeth as the axial spiral gear (16) of the internal gear.

FIG. 1

FIG. 2

FIG. 3

FIG. 4